# EUROPEAN PATENT APPLICATION

(11) **EP 1 199 853 A1**
(43) Date of publication of application: **24.04.2002**
(21) Application number: 01936926.3
(22) Date of filing: 08.06.2001
(51) Int. Cl.: H04L 12/56, H04L 29/08

(54) **INTERNODE SYNCHRONIZING DEVICE, AND INTERNODE SYNCHRONIZING METHOD**

(30) Priority: 12.06.2000 JP 2000174867
(71) Applicant: MATSUSHITA ELECTRIC INDUSTRIAL CO., LTD., Kadoma-shi, Osaka 571-8501 (JP)
(72) Inventor: HIGUCHI, Shinichi, Yokohama-shi, Kanagawa 232-0011 (JP)
(74) Representative: Grünecker, Kinkeldey, Stockmair & Schwanhäusser Anwaltssozietät
(86) International application number: JP0104864
(87) International publication number: WO0197467

(57) **Abstract**

Node synchronization slave apparatus 131 detects a timewise variation in the time of arrival of a data frame transmitted from node synchronization master apparatus 111 via cable transmission path 152, and based on the variation in the time of arrival, calculates a predicted value of the time of arrival of a data frame to be received next and thereafter. When the predicted value of the time of arrival indicates late arrival of a data frame and the arrival of the data frame is out of a reception window, the apparatus 131 notifies node synchronization master apparatus 111 of the predicted value of the time of arrival. According to the notification, node synchronization master apparatus 111 advances a transmission timing of a data frame than a reference value in order for the data frame to be received within the reception window. It is thereby possible to decease the frequency with which data is lost due to late arrival of the data even when transmission delay varies on a cable transmission path connecting the nodes.

## Description

### Technical Field

The present invention relates to a node synchronization apparatus and node synchronization method that perform communications while maintaining synchronization associated with data transmission timing between a base station apparatus and base-station control apparatus in a mobile communication system comprised of the base station and the base-station control apparatus.

### Background Art

In a mobile communication system such as IMT-2000, when a base station apparatus, base-station control apparatus and mobile station apparatus composing the mobile communication system communicate speeches and packets therebetween, each apparatus achieves communications while synchronizing a transmission timing of data with respect to one another. The synchronization method is described specifically, for example, in 3GPP TS25.402 Synchronization in UTRAN Stage 2.

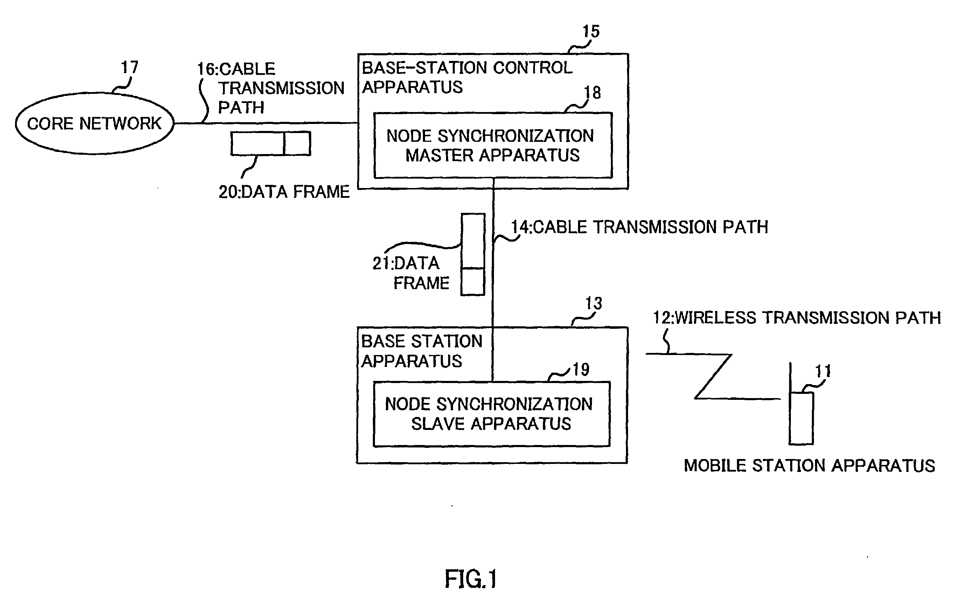

FIG.1 is a block diagram illustrating a configuration of a mobile communication system using a conventional node synchronization apparatus.

The mobile communication system illustrated in FIG.1 is comprised of mobile station apparatus 11 such as a cellular telephone, base station apparatus 13 that communicates with mobile station apparatus 11 via wireless transmission path 12, base-station control apparatus 15 connected with base station apparatus 13 via cable transmission path 14, and core network 17 connected with base-station control apparatus 15 via cable transmission path 16. Base-station control apparatus 15 is provided with node synchronization master apparatus 18, and base station apparatus 13 is provided with node synchronization slave apparatus 19.

A case will be described below that in the above configuration, data is transmitted from core network 17 to mobile station apparatus 11.

Data frame 20 is transmitted from core network 17 to base-station control apparatus 15 via cable transmission path 16.

Then, base-station control apparatus 15 adds timing information determined in node synchronization master apparatus 18 to data frame 20 received from core network 17, and transmits data frame 21 with the information added thereto to base station apparatus 13 via cable transmission path 14 according to a timing determined in node synchronization master apparatus 18.

Base station apparatus 13 extracts the timing information from data frame 21 received from base-station control apparatus 15, and when the timing indicated by the information is coincident with a timing designated by node synchronization slave apparatus 19, transmits data frame 21 to mobile station apparatus 11 via wireless transmission path 12.

Mobile station apparatus 11 receives data frame 21 from base station apparatus 13. According to the above-mentioned operation, data is transmitted from core network 17 to mobile station apparatus 11.

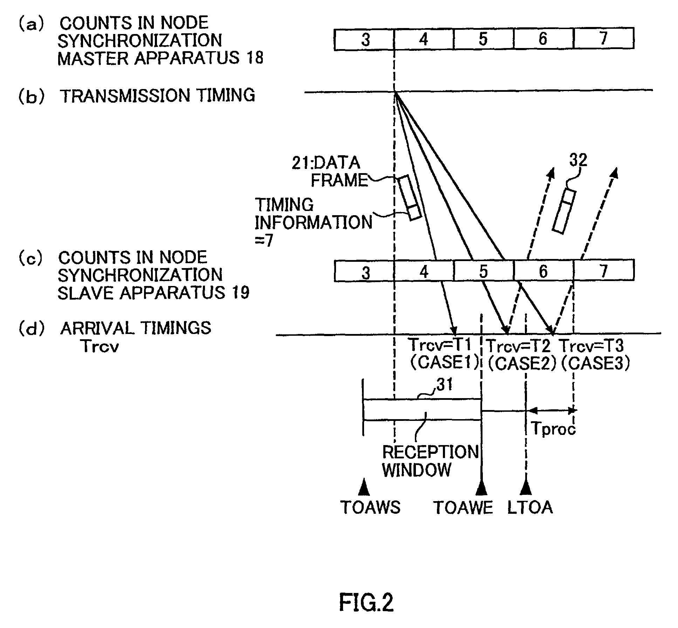

FIG.2 is a timing diagram to explain the operation of the node synchronization apparatus comprised of node synchronization master apparatus 18 of base-station control apparatus 15 and node synchronization slave apparatus 19 of base station apparatus 13.

In FIG.2, (a) indicates counts counted in node synchronization master apparatus 18, and in this conventional example, the value is increased by 1 every 10 ms in the range of 0 to 255. (b) indicates transmission a timing of data in base-station control apparatus 15, and FIG.2 shows data frame 21 is transmitted at the instance when the count becomes 4.

(c) indicates counts counted in node synchronization slave apparatus 19, and in this conventional example, the value is increased by 1 every 10 ms in the range of 0 to 255.

(d) indicates the time of arrival (arrival timing) Trcv of data frame 21 in base station apparatus 13, and FIG.2 shows three arrival patterns, i.e., case 1, case 2 and case 3 caused by different transmission times taken for the data to arrive at base station apparatus 13 from base-station control apparatus 13.

In (d), Tproc is a processing time taken for base station apparatus 13 to start transmitting data frame 21 to wireless transmission path 12.

LTOA (Latest Time of Arrival) is a timing at which base station apparatus 13 should start the processing (such as channel coding and D/A conversion) needed to transmit data frame 21 to mobile station apparatus 11 via wireless transmission path 12.

TOAWS (Time of Arrival Window Start Point) is a time to determine a start point of reception window 31 to receive data frame 21, and TOAWE (Time of Arrival Window End Point) is a time to determine an end point of reception window 31.

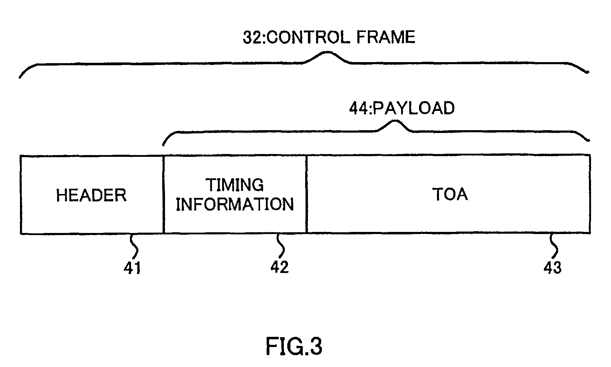

Control frame 32 is generated in base station apparatus 13, and as illustrated in FIG.3, is comprised of header 41 and pay load 44 with timing information 42 and TOA (Time of Arrival) 43 stored therein.

The operation of the conventional node synchronization apparatus will be described below with reference to FIG.2. Base-station control apparatus 15 adds to data frame 21 the timing information indicative of a timing at which base station apparatus 13 transmits the data frame 21 to mobile station apparatus 11 via wireless transmission path 12. In the case of FIG.2, the apparatus 15 transmits data frame 21 including the timing information of 7 to base station apparatus 13 at a timing at which the count becomes 4 as shown in (a).

When base station apparatus 13 receives data frame 21, as shown in (d), the apparatus 13 compares the time of arrival Trcv of data frame 21 with reception window 31, and performs the operation of one of cases 1 to 3 described below.

Case 1 is of "Time of Arrival Trcv ≦TOAWE". In this case, node synchronization slave apparatus 19 determines the reception is normal reception, and transmits received data frame 21 to mobile station apparatus 11 via wireless transmission path 12 from the timing at which the count is 7 corresponding to the designated timing.

Case 2 is of "TOAWE<Time of Arrival Trcv≦LTOA". In this case, node synchronization slave apparatus 19 determines the reception is quasi-normal reception, and transmits received data frame 21 to mobile station apparatus 11 via wireless transmission path 12 from the timing at which the count is 7 corresponding to the designated timing, while notifying that the time of arrival Trcv is out of reception window 31 to base-station control apparatus 15 using a control frame.

In this case, in control frame 32, payload 44 stores the timing information contained in received data frame 21, while storing in TOA 43 the time of arrival Trcv at which the data frame 21 has arrived at base station apparatus 13.

Case 3 is of "LTOA<Time of Arrival Trcv. In this case, node synchronization slave apparatus 19 determines the reception is abnormal reception, i.e., late arrival, and abandons received data frame 21, while transmitting control frame 32 to base-station control apparatus 15 as in case 2.

When node synchronization master apparatus 18 of base-station control apparatus 15 receives control frame 32 from node synchronization slave apparatus 19 of base station apparatus 13 after transmitting data frame 21, the apparatus 18 determines that a timing is delayed at which the apparatus 15 transmits data frame 21, and performs control for advancing a transmission timing of data frame 21.

As described above, conventionally, the transmission timing is advanced by a time corresponding to transmission delay by using the node synchronization apparatus, and a base station apparatus on a transmission side thereby transmits a data frame at an optimal data frame transmission timing.

However, in the conventional apparatus the node synchronization slave apparatus notifies the node synchronization master apparatus of the transmission delay only after the transmission delay has occurred, and there arises a case that the time of arrival of a data frame is beyond LTOA when transmission delay on a cable transmission path varies with time. In this case, the node synchronization slave apparatus abandons the data frame due to the late arrival thereof before the node synchronization master apparatus controls the transmission timing of the data frame, thereby resulting in a problem that data transmission quality deteriorates.

Further, in communication services such as packet communications where re-transmission is required to recovery data on an higher layer when data is lost, when a data frame is abandoned due to its late arrival, re-transmission is required, and there occurs a problem that utilization efficiency of cable transmission path deteriorates, while the delay on the cable transmission path is further increased.

### Disclosure of Invention

It is an object of the present invention to provide a node synchronization apparatus and node synchronization method capable of decreasing the frequency with which data is lost due to late arrival of the data even when the transmission delay varies on a cable transmission path connecting nodes.

The object is achieved by that a base station apparatus calculates a predicted value of time of arrival of a data frame, and notifies a base-station control apparatus of the predicted value when late arrival of a data frame is expected, and that the base-station control apparatus advances a timing for transmitting a data frame.

### Brief Description of Drawings

FIG.1 is a block diagram illustrating a configuration of a mobile communication system using a conventional node synchronization apparatus;
FIG.2 is a timing diagram to explain the operation of the conventional node synchronization apparatus;
FIG.3 is a diagram illustrating a configuration of a control frame transmitted from a base-station control apparatus to a base station apparatus in the mobile communication system using the conventional node synchronization apparatus;
FIG.4 is a block diagram illustrating a configuration of a base-station control apparatus and base station apparatus in a mobile communication system using a node synchronization apparatus according to an embodiment of the present invention;
FIG.5 is a timing diagram to explain the operation of the node synchronization apparatus according to the embodiment of the present invention; and
FIG.6 is a flow diagram to explain the operation of a reception timing determining section in the node synchronization apparatus according the embodiment of the present invention.

### Best Mode for Carrying Out the Invention

An embodiment of the present invention will be described below with reference to accompanying drawings.

### (First embodiment)

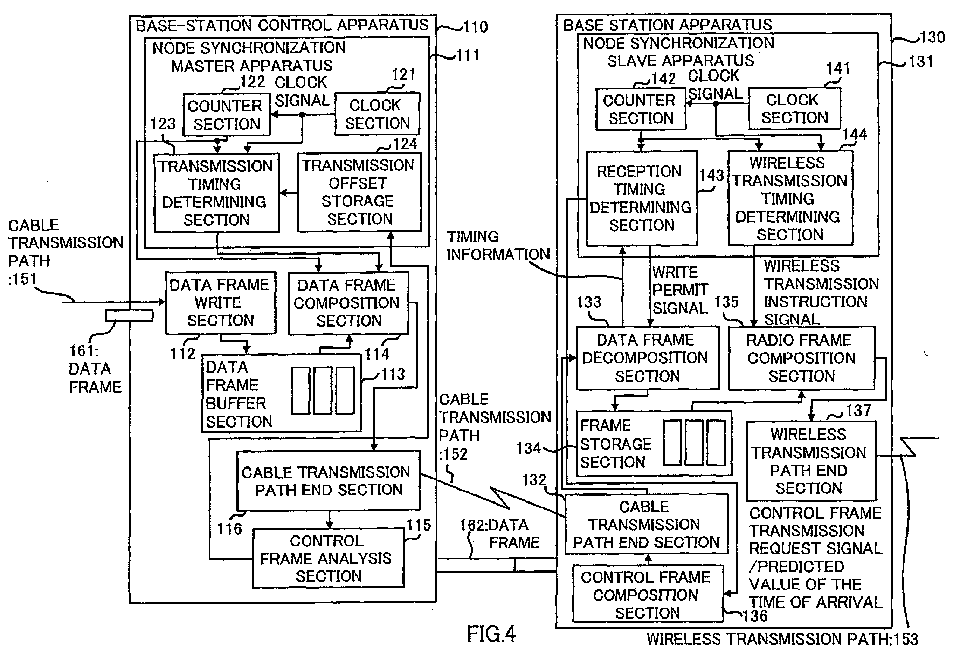

FIG.4 is a block diagram illustrating a configuration of a base-station control apparatus and base station apparatus in a mobile communication system using a node synchronization apparatus according to one embodiment of the present invention.

Base-station control apparatus 110 illustrated in FIG.4 is provided with node synchronization master apparatus 111, data frame write section 112, data frame buffer section 113, data frame composition section 114, control frame analysis section 115, cable transmission path end section 116. Node synchronization master apparatus 111 is provided with clock section 121, counter section 122, transmissiontiming determining section 123, and transmission offset storage section 124.

Base station apparatus 130 is provided with node synchronization slave apparatus 131, cable transmission path end section 132, data frame decomposition section 133, frame storage section 134, radio frame composition section 135, control frame composition section 136, and wireless transmission path end section 137. Node synchronization slave apparatus 131 is provided with clock section 141, counter section 142, reception timing determining section 143, and wireless transmission timing determining section 144.

Data frame write section 112 is connected to a core network not shown via cable transmission path 151, cable transmission path end section 116 and cable transmission path end section 132 are connected via cable transmission path 152, and wireless transmission path end section 137 is connected to a mobile station apparatus such as a cellular telephone not shown via wireless transmission path 153.

The operation in each section in base-station control apparatus 110 will be described below.

In node synchronization master apparatus 111, clock section 121 outputs a clock signal at predetermined intervals to counter section 122 and transmission timing determining section 123.

Counter section 122 is an up-counter, performs cyclical count in the range of 0 to 2559 while increasing the count by 1 every time the clock signal is input from clock section 121, and outputs the count to transmission timing determining section 123 and data frame composition section 114.

Transmission timing determining section 123 reads the count of counter section 122 every time the clock signal is input from clock section 121, and every time the count is a multiple of a predetermined period T (T is an arbitrary positive number), outputs a transmission permit signal for permitting data frame composition section 114 to transmit data to data frame composition section 114. It is assumed in this case that a remainder obtained by dividing the count by the period T is compared with a transmission offset value α (α is a positive number meeting α<T) stored in transmission offset storage section 124, and that when the remainder is equal to the transmissionoffset value, the transmission permit signal is output to data frame composition section 114. It is thereby possible to output the transmission permit signal at timings of aT + α(a is a positive number meeting aT<2559-α).

For example, when the frequency of the clock signal is 1 kHz, T is 10 (T=10) and transmission offset value is 0, counter section 122 counts every 1 ms because the frequency of the clock signal is 1 kHz, and the transmission permit signal is transmitted at the time the count is a multiple of 10, i.e., every 10 ms because T=10 and the transmission offset value is 0. When the transmission offset value is 7 under the above condition, the transmission permit signal is output at the time the count is a sum of a multiple of 10 and 7 (17, 27, 37,...), i.e., every 10 ms starting from the count of 17. It is thereby possible to output in advance the transmission permit signal at the count of 17, instead of outputting at the count of 20.

Transmission offset storage section 124 stores an initial value of the transmission offset (that is assumed to be 0 in this embodiment) predetermined before the communication is started. Then, control frame analysis section 115 updates the stored transmission offset value during the communications.

Data frame write section 112 controls the write of data frame 161 received via cable transmission path 151 in data frame buffer section 113.

Data frame buffer section 113 is a FIFO (First In First Out) type buffer, and stores data frames 161 in the order in which the data frames are written under the control of data frame write section 112, so that the data frames are read by data frame composition section 114 in the order in which the data frames are written.

When the transmission permit signal is input to data frame composition section 114 from transmission timing determining section 123, the section 114 reads one or more data frames from data frame buffer section 113, and generates data frame 162 to be transmitted to base station apparatus 130, while stores in data frame 162 a value obtained by adding the predetermined offset value to the count of counter section 122 as the timing information. Then, the section 114 outputs this data frame 162 to cable transmission path end section 116.

Control frame analysis section 115 divides a control frame which is generated in frame composition section 136 and input to the section 115 via cable transmission path 152 or the like, and extracts a predicted value of the time of arrival of next data frame 162 stored in the control frame, while outputting a sum of the predicted value and T to transmission offset storage section 124.

Cable transmission path end section 116 transmits data frame 162 output from data frame composition section 114 to base station apparatus 130 via cable transmission path 152.

The operation in each section in base station apparatus 130 will be described below.

In node synchronization slave apparatus 131, clock section 141 outputs a clock signal at predetermined intervals to counter section 142 and wireless transmission timing determining section 144.

Counter section 142 is an up-counter, performs cyclical count in the range of 0 to 2559 while increasing the count by 1 every time the clock signal is input from clock section 141, and outputs the count to reception timing determining section 143 and wireless transmission timing determining section 144.

It is assumed that this count is coincident with the count of counter section 122 in node synchronization master apparatus 111 or a difference between the counts is known in advance, and that this clock signal has the same frequency of the clock signal generated in clock section 121 in the master apparatus 111.

Reception timing determining section 143 generates a write permit signal for permitting data frame decomposition section 133 to write, control frame transmission request signal and predicted value of the time of arrival, based on the time of. arrival and the timing information, extracted from received data frame 162, notified from data frame decomposition section 133 , according to the operation described later. The section 143 outputs the write permit signal to data frame decomposition section 133, and further outputs the control frame transmission request signal and predicted value of the time of arrival to control frame composition section 136.

Wireless transmission timing determining section 144 reads the count of counter section 142 every time the clock signal is input from clock section 141, generates a wireless transmission instruction signal every time the count becomes a multiple of the predetermined period T (T is an arbitrary positive number) to output to radio frame composition section 135. When the count is not coincident with such a multiple, the section 144 does not generate the wireless transmission instruction signal.

For example, when the frequency in clock section 141 is 1 kHz and T is 10 (T=10), counter section 142 counts every 1 ms because the frequency in clock section 141 is 1 kHz, and outputs the wireless transmission instruction signal at the time the count is a multiple of 10, i.e., every 10 ms because T is 10 (T=10).

Cable transmission path end section 132 receives data frame 162 from base-station control apparatus 110 via cable transmission path 152 to output to data frame decomposition section 133. Further, the section 132 receives the control frame input from control frame composition section 136 to output to base-station control apparatus 110 via cable transmission path 152.

Data frame decomposition section 133 divides received data frame 162 input from cable transmission path end section 132 to extract the timing information, notifies this informationto receptiontiming determining section 143, and when receiving the write permit signal indicative of enabling the write (hereinafter referred to as "enable" ) from reception timing determining section 143, stores data frame 162 in frame storage section 134, while when receiving the write permit signal indicative of disabling the write (hereinafter referred to as "disable"), abandoning data frame 162.

Data frame storage section 134 stores received data frame 162 and the timing information contained in the data frame 162, each input from data frame decomposition section 133.

When the wireless transmission instruction signal is input to radio frame composition section 135 from wireless transmission timing determining section 144, the section 135 reads from frame storage section 134 a data frame having the timing information with the count of counter section 142 coincident with a multiple of T to generate a radio frame.

When a control frame transmission request signal is input to control frame composition section 136 from reception timing determining section 143, the section 136 stores a predicted value of the time of arrival provided at this point in the control frame, and transmits the control frame with the predicted value of the time of arrival stored therein to base-station control apparatus 110 via cable transmission end section 132.

Wireless transmission path end section 137 transmits the radio frame input from radio frame composition section 135 to a mobile station apparatus not shown via wireless transmission path 153.

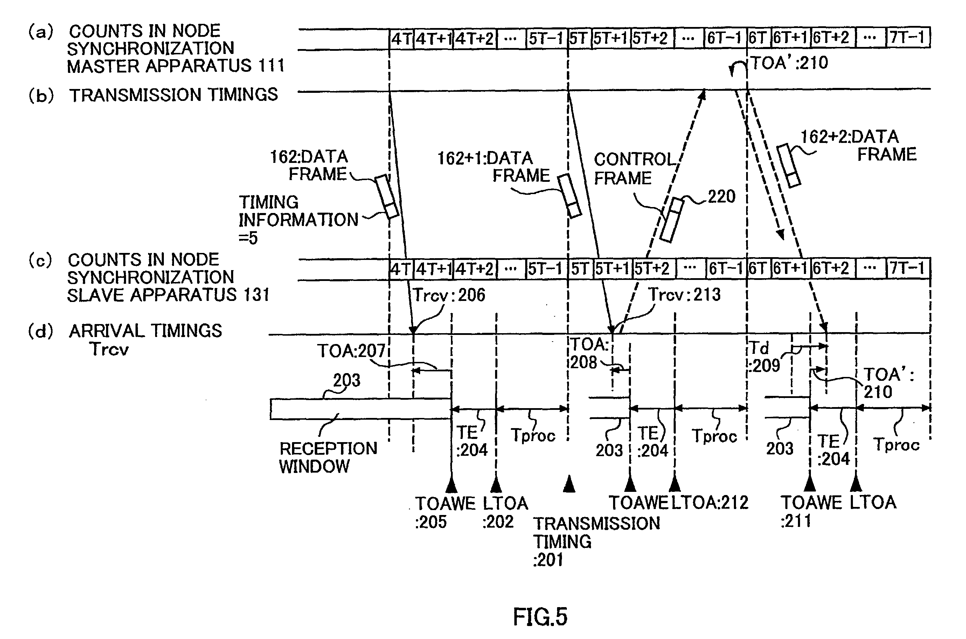

The operation of the node synchronization apparatus will be described with reference to a timing diagram illustrated in FIG.5.

In addition, in FIG.5, (a) indicates counts of counter section 122 in node synchronization master apparatus 111, (b) indicates transmission timings of data in base-station control apparatus 110, (c) indicates counts of counter sections 142 in node synchronization slave apparatus 131, and (d) indicates the time of arrival (arrival timing) Trcv of data frame 162 in base station apparatus 130.

Base-station control apparatus 110 adds to data frame 162 the timing information (timing information=5 in FIG.5)indicative of a timing at which base station apparatus 130 transmits the data frame 162 to a mobile station apparatus, and transmits the data frame 162 to base station apparatus 130 at a timing at which the count is 4T as shown by (a).

Transmission timing 201 is a timing at which base station apparatus 130 transmits data frame 162 to the mobile station apparatus based on the timing information contained in the data frame 162 transmitted from the base-station control apparatus, and is obtained by multiplying the timing information by T.

LTOA (Latest Time Of Arrival) 202 is a timing at which the processing (such as channel coding and D/A conversion) needed to transmit data frame 162 to the mobile station apparatus should be started, and is obtained by subtracting Tproc from the transmission timing.

When base station apparatus 130 receives data frame 162, the apparatus has set reception window 203 as a predetermined time range to determine normal reception.

TE204 is a parameter related to predetermined reception window 203 and is indicative of a negative value. TOAWE (Time Of Arrival Window End Point) 205 is an end time of reception window 203 to receive data frame 162, and is obtained by adding TE 204 to LTOA 202.

Trcv 206 is a time at which data frame 162 arrives at base station apparatus 130.

TOA 207 is a determination parameter of the time of arrival of data frame 162 with respect to reception window 203, is obtained by subtracting TOAWE 205 from Trcv 206, and is a negative value in the case of FIG.5. TOA 208 is a determination parameter of the time of arrival of next received data frame (expressed with 162+1) with respect to reception window 203, and is obtained in the same way as TOA 207.

Td 209 is a variation amount in the time of arrival with respect to reception window 203, and is obtained by subtracting TOA 208 from TOA 207.

TOA'210 is a predicted value of a determination parameter of the time of arrival of data frame 162+2 to be received after the next data frame 162+1 to be received, and is obtained by subtracting Td 209 from TOA 208.

TOAWE 211 is an end time of reception window 203 to receive data frame 162+2.

LTOA 212 is a timing at which the processing (such as channel coding and D/A conversion) needed to transmit data frame 162+1 to the mobile station apparatus should be started.

Trcv 213 is a time at which data frame 162+1 arrives at base station apparatus 130, and control frame 220 stores a predicted value TOA'210 of the time of arrival of data frame 162+2.

As case 1, a case will be described of Trcv 213-LTOA 212≦0, i.e., where data frame 162+1 is received before LTOA 212. In this case, reception timing determining section 143 determines that the data frame 162+1 is data enabling the processing, and generates "enable". Data frame decomposition section 133 stores the data frame 162+1 in frame storage section 134.

As case 2, a case will be described of Trcv 213-LTOA 212>0, i.e., where data frame 162+1 arrives later than LTOA 212. In this case, reception timing determining section 143 determines that the data frame 162+1 is of late arrival with respect to the timing enabling the processing, and generates "disable". Data frame decomposition section 133 abandons the data frame 162+1.

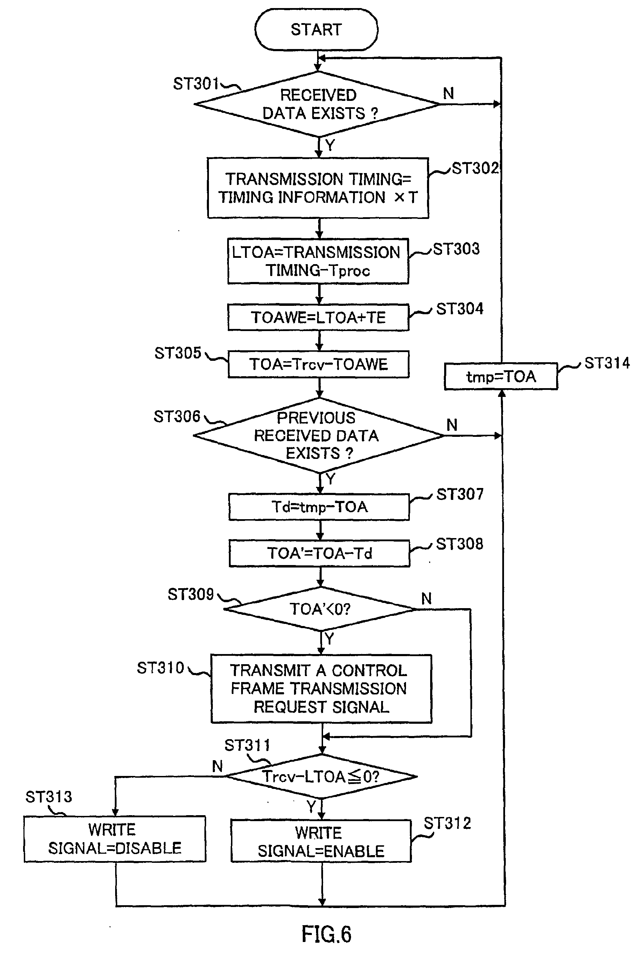

The operation of reception timing determining section 143 will be described below with reference to a flow diagram illustrated in FIG.6.

First, in step (hereinafter referred to as "ST") 301, it is determined whether or not received data frame 162 exists. When data frame 162 does not exist, the determination processing of ST301 is continued.

When data frame 162 exists, in ST302, after receiving the timing information extracted in data frame decomposition section 133, the section 143 obtains a calculation result of the multiplication of the timing information by T, and thereby calculates transmission timing 201 of the data frame to a mobile station apparatus .

In ST303, by subtracting predetermined processing delay time Tproc from transmission timing 201, the section 143 calculates LTOA 202 that is a timing at which the processing (such as channel coding and D/A conversion) needed to transmit the data frame 162 to the mobile station apparatus should be started.

In ST304, by adding TE 204 that is the parameter related to predetermined reception window 203 to LTOA 202, the section 143 calculates TOAWE 205 that is the end time of reception window 203.

In ST305, by subtracting Trcv 206 that is the time of arrival of data frame 162 from TOAWE 205, the section 143 calculates TOA 207 that is the determination parameter of the time of arrival with respect to reception window 203.

In ST306, it is determined whether or not data frame (expressed with 162-1) not shown is received before data frame 162 is received after the communication is started. Reception timing determining section 143 that stores a reception history detects the data to perform the determination.

When previous received data frame 162-1 does not exist, in ST314, TOA 207 that is the determination parameter of the received data frame 162 is temporarily stored in variable tmp, and the processing flow returns to ST301.

Thereafter, the section 143 executes the processing of ST301 to ST306 similarly on next received data frame 162+1, and thereby calculates TOA 208 that is the determination parameter of the time of arrival with respect to reception window 203.

As a result of the determination in ST306, when previous received data 162 exists, in ST307, the section 143 calculates a difference between TOA 207 that is the determination parameter related to previous received data frame 162 stored in variable tmp and TOA 208 that is the determination parameter of the data frame 162. In other words, the section 143 calculates Td 209 that is the variation amount in the time of arrival with respect to reception window 203, by subtracting TOA 208 from TOA 207.

In ST308, the section 143 calculates TOA'210 that is the predicted value of the determination parameter of the time of arrival of data frame 162+2 to be received next, by subtracting Td 209 from TOA 208.

In ST309, when TOA'210<0, i.e., when calculated TOA'210 that is the predicted value of the determination parameter of the time of arrival of next received data frame 162+2 is out of reception window 203, the processing flow proceeds to ST310. When TOA'210≧0, i.e., when calculated TOA'210 that is the predicted value of the determination parameter of the time of arrival of the data frame 162+2 is not out of reception window 203, the processing flow proceeds to ST311.

In ST310, the section 143 outputs the control frame transmission request, predicted value TOA' 210 of the time of arrival and control frame transmission request signal to control frame composition section 136.

In ST311, corresponding to the relationship between time of arrival Trcv 213 and LTOA 212 of the received data frame 162+1, the section 143 outputs the write permit signal indicative of "enable" or "disable" to data frame decomposition section 133 as described below.

As case 1, when Trcv 213-LTOA 212≦0, i.e., when data frame 162+1 is received before LTOA 212, in ST312, the section 143 determines that the data frame 162+1 is data enabling the processing, and generates "enable". Data frame decomposition section 133 stores the data frame 162+1 in frame storage section 134. Then, the processing flow proceeds to ST314 and the processing is repeated from ST301.

As case 2, when Trcv 213-LTOA 212>0, i.e., when data frame 162+1 arrives later than LTOA 212, in ST313, the section 143 determines that the data frame 162+1 is of late arrival with respect to the timing enabling the processing, and generates "disable". Data frame decomposition section 133 abandons the data frame 162+1. Then, the processing flow proceeds to ST314 and the processing is repeated from ST301.

The operation of base-station control apparatus 110 when receiving control frame 220 illustrated in FIG.5 will be described below. In addition, it is assumed that control frame 220 has the same configuration as that illustrated in FIG.3.

When base-station control apparatus 110 receives control frame 220 from base station apparatus 130 via cable transmission path 152, control frame analysis section 115 divides control frame 220, and extracts the predicted value TOA'210 of the time of arrival stored in control frame 220, while notifying transmission offset storage section 124 of the predicted value TOA'210.

Transmission offset storage section 124 adds the predicted value TOA'210 to T, and stores the resultant.

When base-station control apparatus 110 transmits a data frame next, the apparatus 110 is capable of transmitting the data frame at a timing earlier than a general transmission timing by the predicted value TOA'. In other words, base-station control apparatus 110 is capable of determining an optimal transmission timing in advance, in order for the data frame not to be out of reception window 203 of base station apparatus 130.

In particular, in the case where a transmission time of a data frame varies with time, for example, in the case of using ATM (Asynchronous Transmission Mode) as a transmission method on cable transmission path 152, in order for a data frame to be always received in timing enabling the processing in base station apparatus 130, base-station control apparatus 110 is capable of determining the transmission timing of the data frame.

Thus, according to node synchronization apparatus of this embodiment, node synchronization slave apparatus 131 detects a timewise variation in the time of arrival of a data frame transmitted from node synchronization master apparatus 111 via cable transmission path 152, and from the variation in the time of arrival, calculates a predicted value of the time of arrival of a next data frame. When the predicted value is out of reception window 203, the apparatus 131 notifies node synchronization master apparatus 111 of the predicted value of the time of arrival. According to the notification, node synchronization master apparatus 111 advances the transmission timing of a data frame than a reference value so that the data frame is received within reception window 203. It is thereby possible to prevent base station apparatus 130 from abandoning a data frame due to its late arrival.

The effectiveness is remarkable in particular when a variation in data frame transmission time is abrupt and large on cable transmission path 152.

Further, the suppressed abandonment of data frame decreases the frequency of re-transmission of data frame on an higher layer, and it is thereby possible to suppress the congestion on cable transmission path 152, and to prevent an occurrence of deterioration of communication quality in communication services such as speech.

As can be apparent from the foregoing, according to the present invention, it is possible to decease the frequency with which data is lost due to late arrival of the data even when transmission delay varies on a cable transmission path connecting nodes.

This application is based on the Japanese Patent ApplicationNo.2000-174867 filed onJune 12, 2000, entire content of which is expressly incorporated by reference herein.

### Industrial Applicability

The present invention is suitable for being used in a base station apparatus and base-station control apparatus used in a mobile communication system.

## Claims

1. A node synchronization apparatus provided in a base station apparatus, said node synchronization apparatus comprising:
predicted value calculating means for calculating a predicted value of a reception timing of a data frame to be received next, based on a reception timing of a data frame that the base station apparatus has received; and
reception timing determining means for determining whether or not the predicted value is out of a data frame reception enabling time of the base station apparatus.

2. A base station apparatus comprising:
the node synchronization apparatus according to claim 1; and
control frame transmitting means for transmitting a control frame with the predicted value stored therein to a communication partner.

3. A node synchronization apparatus comprising:
transmission timing determining means for determining a transmission timing of a data frame based on the predicted value transmitted from the base station apparatus according to claim 2.

4. A base-station control apparatus comprising:
the node synchronization apparatus according to claim 3; and
data frame transmitting means for transmitting a data frame at a transmission timing determined in the node synchronization apparatus.

5. A communication apparatus comprising:
reception timing determining means for calculating a predicted value of a reception timing of a data frame to be received next, based on a reception timing of a data frame received previously, and determining whether or not the predicted value is out of a data frame reception enabling time; and
control frame transmitting means for transmitting a control frame with the predicted value stored therein to a communication partner when the predicted value is out of the data frame reception enabling time.

6. A communication apparatus comprising:
transmission timing determining means for determining a transmission timing of a data frame based on the predicted value transmitted from the communication apparatus according to claim 5; and
data frame transmitting means for transmitting a data frame at the determined transmission timing.

7. A node synchronization method, comprising:
in an apparatus on a receiving side,
calculating a predicted value of a reception timing of a data frame to be received next to notify to an apparatus on a transmitting side, and
in the apparatus on the transmitting side,
transmitting the data frame to the apparatus on the receiving side at a transmission timing determined based on the predicted value.

8. A node synchronization method, comprising:
in an apparatus on a receiving side,
calculating a predicted value of a reception timing of a data frame to be received next;
and
transmitting a control frame with the predicted value stored therein to an apparatus on a transmitting side when the predicted value is out of a data frame reception enabling time, and
in the apparatus on the transmitting side,
determining a transmission timing of the data frame based on the predicted value; and
transmitting the data frame at the determined transmission timing to the apparatus on the receiving side.
